# EUROPÄISCHE PATENTSCHRIFT

(11) **EP 3 220 489 B1**
(45) Veröffentlichungstag und Bekanntmachung des Hinweises auf die Patenterteilung: **20.05.2020**
(21) Anmeldenummer: 17466005.0
(22) Anmeldetag: 14.03.2017
(51) Int. Cl.: H01R 13/631, B60N 2/30, B60N 2/015, B60N 2/02, H01R 13/453

(54) **ELEKTRISCHE VERBINDUNGVORRICHTUNG MIT ZWEI IN EINGRIFF BRINGBAREN VERBINDUNGSTEILEN**
ELECTRICAL CONNECTION DEVICE WITH TWO ENGAGING CONNECTION PARTS
DISPOSITIF DE RACCORDEMENT ÉLECTRIQUE COMPRENANT DEUX PARTIES DE RACCORDEMENT ENFICHABLES

(30) Priorität: 18.03.2016 CZ 20160164
(43) Veröffentlichungstag der Anmeldung: 20.09.2017
(73) Patentinhaber: Skoda Auto a.s., 29301 Mladá Boleslav (CZ)
(72) Erfinder: Ladislav, Ács, CZ-29301 Mladá Boleslav (CZ)

(56) Entgegenhaltungen:
- EP-A1- 1 655 168
- DE-T2- 69 902 813

## Beschreibung

Die Erfindung betrifft eine elektrische Verbindungvorrichtung mit zwei in Eingriff bringbaren Verbindungsteilen, von denen das eine Verbindungsteil als Stecker und das andere Verbindungsteil als Buchse ausgebildet ist, wobei der Stecker und die Buchse einander zugeordnete elektrisch leitende Kontaktelemente aufweisen und die elektrische Verbindungvorrichtung zur Herstellung einer elektrischen Verbindung zwischen einem Fahrzeugsitz und einem Fahrzeugbordnetz dient.

In der EP 1 655 168 A1 ist ein elektrischer Steckverbinder mit einem in einer Aussparung einer Bodenstruktur eines Fahrzeugs angeordneten ersten Anschlusselement, einen zum ersten Anschlusselement komplementär ausgebildeten zweiten Anschlusselement, welches an einer Unterseite eines Fahrzeugsitzes angeordnet ist, der zwischen einer Montagestellung und einer Sitzstellung um eine Schwenkachse verschwenkbar ist. Zudem wird ein im Bereich der Schwenkachse angeordneter und zwischen den Fahrzeugsitz und eine Abdeckung für die Aussparung geschalteten Getriebemechanismus gezeigt, der dafür genutzt wird, um die Aussparung, welche in der Montagestellung des Fahrzeugsitzes durch die Abdeckung verschlossen ist, beim Verschwenken des Fahrzeugsitzes in die Sitzstellung zu öffnen. In der US 6,752,445 B1 wird eine Anordnung gezeigt, die einen elektrischen Steckverbinder für einen schwenkbaren Fahrzeugsitz zeigt. Das am Fahrzeug befestigte Steckverbinderelement wird mit mit einer schwenkbaren Abdeckung geschützt, die bei Heranschwenken des Sitzes durch das am Sitz befestigte Steckverbindungselement zur Seite verdrängt. Die Abdeckung ist hier außerhalb des Steckverbinderelements befestigt Die DE 69902813 T2 zeigt einen Stecker in einer Buchse, wobei die Buchse mit ihrer Halterung gegenüber einem Grundelement federnd gelagert ist.

Nachteilig an dem Stand der Technik ist, dass das am Sitz befestigte Steckverbinderelement sehr passgenau auf das am Fahrzeug befestigte Steckverbinderelement zugeführt werden muss. Eine Steckverbindung ist aber gerade sehr störanfällig, da ein Steckkontakt leicht verbiegen kann.

Es ist damit Aufgabe der vorliegenden Erfindung einen Kontakt zu schaffen, der robust gegenüber einer Verschiebung des am Sitz befestigten Kontaktelements ist.

Die Aufgabe wird mit der vorliegenden Erfindung nach dem Anspruch 1 gelöst. Vorteilhafte Ausgestaltungen der erfindungsgemäßen Vorrichtung sind in den Unteransprüchen beschrieben.

Erfindungsgemäß wird eine elektrische Verbindungvorrichtung mit zwei in Eingriff bringbaren Verbindungsteilen beschrieben, von denen das eine Verbindungsteil als Stecker und das andere Verbindungsteil als Buchse ausgebildet ist. Der Stecker und die Buchse weisen einander zugeordnete elektrisch leitende Kontaktelemente auf. Die elektrische Verbindungvorrichtung dient zur Herstellung einer elektrischen Verbindung zwischen einem Fahrzeugsitz und einem Fahrzeugbordnetz. Erfindungsgemäß ist die Buchse in einer Buchsenaufnahme dreidimensional beweglich gelagert und der Stecker ist in der Buchse in der Kontaktstellung mindestens zweidimensional beweglich.

Mit der elektrischen Verbindungsvorrichtung ist es möglich elektrische Elemente in einem herausnehmbaren Fahrzeugsitz zu installieren. Die elektrischen Elemente können beispielsweise eine Gurtschlossüberwachung, ein Sitzbelegungssensor, eine Sitzheizung oder andere elektrische Elemente darstellen. Die Buchsenaufnahme ist dabei zumindest mittelbar an einem Teil der Fahrzeugkarosserie befestigt.

Die Kontaktstellung ist erfindungsgemäß die Stellung, in der der Stecker sich in der Buchse befindet und ein elektrischer Kontakt zwischen Stecker und Buchse besteht.

Eine weitere Ausprägung der erfindungsgemäßen Vorrichtung ist, dass die bewegliche Lagerung der Buchse in der Buchsenaufnahme in der z-Richtung über mindestens ein Federelement erfolgt. Das mindestens eine Federelement ist Teil der Buchsenaufnahme und/oder der Buchse. Wesentlich an der Feder ist, dass durch die Feder ermöglich wird, dass die Buchsenaufnahme in der Buchse über die Feder in Z-Richtung beweglich ist. Die Z-Richtung ist im Wesentlichen die Richtung, in die der Stecker in die Buchse eintaucht. Durch die Beweglichkeit der Buchse in der Buchsenaufnahme wird vorteilhafterweise erreicht, dass eine zuverlässige Kontaktierung zwischen Buchse und Stecker auch bei großen Toleranzen in Z-Richtung erfolgen kann.

Erfindungsgemäß ist vorgesehen, dass die Außenmaße der Buchse in x- und y-Richtung kleiner sind als die Innenmaße der Buchsenaufnahme, so dass die Buchse in der Buchsenaufnahme in der x- und y-Richtung beweglich ist. Die x- und y-Richtung ist jeweils senkrecht zu der z-Richtung, wobei die x- und y-Richtung auch jeweils zueinander senkrecht stehen.

Eine weitere Ausprägung der erfindungsgemäßen Vorrichtung ist, dass die Außenmaße des Steckers in x- und y-Richtung kleiner sind als die Innenmaße der Buchse, so dass der Stecker in der Buchse in der x- und y-Richtung beweglich ist.

Eine weitere Ausprägung der erfindungsgemäßen Vorrichtung ist, dass die Kontaktflächen der Buchse größer sind als die Kontaktflächen der Stecker. Dabei sind die Kontaktflächen der Buchse mindestens so groß, dass die Kontaktflächen des Steckers an den Kontaktflächen der Buchse anliegen mit einer Mindestkontaktfläche anliegen, ohne einen Kontakt zu einem benachbarten Kontaktfläche innerhalb der Buchse zu haben, wenn sich der Stecker in der Kontaktstellung in der Buchse in einer Endstellung in X- und Y-Richtung befindet. Vorteilhaft an dieser Ausprägung ist, dass die somit sicher auf eine einfache Art und Weise ein Toleranzausgleich in X-Y-Richtung erfolgen kann. Die Größe des möglichen Toleranzausgleiches ist über die Größe der Kontaktflächen festlegbar.

Eine weitere Ausprägung der erfindungsgemäßen Vorrichtung ist, dass die Kontaktelemente der Stecker als elektrisch leitende Federkontaktstreifen ausgebildet sind und zugehörige Federelemente aufweisen. Die Kontaktelemente der Buchse sind als annähernd ebene Kontaktflächen ausgelegt. Eine alternative Ausprägung der erfindungsgemäßen Vorrichtung ist, dass die Kontaktelemente der Buchse als elektrisch leitende Federkontaktstreifen ausgebildet sind und zugehörige Federelemente aufweisen. Die Kontaktelemente der Stecker sind als annähernd ebene Kontaktflächen ausgelegt. Mittels der elektrisch leitenden Federkontaktstreifen mit deren zugehörigen Federelementen erfolgt eine sichere elektrische Kontaktierung zwischen der Stecker und Buchse.

Eine weitere Ausprägung der erfindungsgemäßen Vorrichtung ist, dass eine mechanische Verriegelung der elektrischen Verbindungvorrichtung über die Verriegelung des Fahrzeugsitzes an Fixierungspunkten des Fahrzeugs erfolgt. Vorteilhaft an dieser Ausprägung ist, dass keine eigene mechanische Verriegelung der elektrischen Verbindungsvorrichtung notwendig ist. Die elektrische Verbindung ist sicher durch die mechanische Verankerung des Sitzes an den Fixierungspunkten des Fahrzeugs mechanisch verriegelt.

Eine weitere Ausprägung der erfindungsgemäßen Vorrichtung ist, dass die Buchse eine Abdeckung aufweist, wobei die Abdeckung durch zwei Federklappen gebildet ist, die mit je einem Federgelenk an der Buchse befestig sind. Die Federklappen sind jeweils in die Buchse schwenkbar gelagert. Damit ist ein ausreichender mechanischer Schutz für die Kontakte für eine im Fahrzeug anliegende Kleinspannung gegeben.

Eine weitere Ausprägung der erfindungsgemäßen Vorrichtung ist, dass die Buchse mindestens einen Steg aufweist, der derart angeordnet ist, dass die Federklappen zueinander in der geschlossenen Stellung an dem Steg anliegen und eine annähernd ebene Fläche bilden. Eine geschlossene Stellung ist erfindungsgemäß die Stellung, die vorliegt, wenn der Stecker nicht in die Buchse eingeführt ist. Federn der Federklappen sind derart gestaltet, dass die Federklappen in der geschlossenen Stellung aus dem inneren der Buchse nach außen gedrängt werden. Mittels des Steges wird ein Herausdrängen der Federklappen am Rande der Buchse verhindert und es entsteht eine annähernd ebene Fläche, die durch die zueinander angeordneten Federklappen gebildet wird.

Eine weitere Ausprägung der erfindungsgemäßen Vorrichtung ist, dass die Federklappen derart angeordnet sind, dass die Federklappen beim Einführen des Steckers in die Buchse an den Rand innerhalb der Buchse gedrängt werden. In der Kontaktstellung sind die Federelemente an den Rand innerhalb der Buchse gedrängt.

Eine weitere Ausprägung der erfindungsgemäßen Vorrichtung ist, dass mindestens eine Federklappe in ein inneres und ein äußeres Element geteilt ist, welche durch ein Gelenk verbunden sind. Eine besondere Ausprägung ist hierbei, dass das Gelenk derart an der Federklappe angeordnet ist, dass das innere Element der Federklappe in der Kontaktstellung annähernd parallel zum Boden der Buchse liegt. Mittels dieser Ausprägung ist eine sehr kompakte Bauweise der Buchse möglich. Das Gelenk ist in einer besonderen Ausführungsform derart ausgebildet, dass das äußere und innere Element der Federklappe in der geschlossenen Stellung eine Ebene bilden, wenn der Steg nur eine Begrenzung für das innere Element der zweiten Federklappe darstellt. Dieses kann über eine Sperre im Gelenk erreicht werden. Vorteilhaft an dieser Ausführungsform ist, dass das Gelenk keine Feder benötigt Die ebene Fläche in der geschlossenen Stellung wird beim Übergang von der Kontaktstellung in die geschlossene erreicht, indem das innere Element derart mit dem Steg zusammenwirkt, dass das innere Element durch den Steg in die ebene Fläche gedrängt wird. Diese Ausführungsform ermöglicht einen kleinen Bauraum der Buchse, da die seitliche Wand der Buchse, an der die geteilte Federklappe anliegt, in der Höhe kleiner ausfallen kann, als wenn eine ungeteilte Federklappe an der seitlichen Wand anliegen müsste.

Eine weitere Ausprägung der erfindungsgemäßen Vorrichtung ist, dass der Stecker an den äußeren Seiten zwei Außenstege aufweist, wobei die Außenstege mindestens eine Höhe aufweisen, die größer als die Herausragweite der Federkontaktstreifen aus dem Stecker ist. Mittels der zwei Außenstege wird somit auf einfache Art und Weise erreicht, dass die Federkontaktelemente des Sitzes gut geschützt sind. Beim Aufsetzen des Sitzes mit dem Stecker auf eine Fläche, setzen die Außenstege des Steckers auf die Fläche auf und es wird verhindert, dass die Federkontaktelemente auf die Fläche aufsetzen.

Ausführungsbeispiele und Details der Erfindung sind in den folgenden Figuren dargestellt:
Fig. 1 zeigt eine elektrische Verbindungsvorrichtung.
Fig. 2a zeigt eine Buchsenaufnahme.
Fig. 2b und 2c zeigen die Buchsenaufnahme mit einer Buchse.
Fig. 3 zeigt die Buchse in einer Kontaktstellung.
Fig. 4 zeigt die Buchse in einer Schnittdarstellung.
Fig. 5 zeigt den Stecker in einer Schnittdarstellung.
Fig. 6a, 6b und 6c zeigen Zustände, beim Einführen eines Steckers in eine Buchse.
Fig. 7 zeigt einen Fahrzeugsitz.
Fig. 8 und 9 zeigen eine Fahrzeugbodenstruktur zur Befestigung eines Fahrzeugsitzes

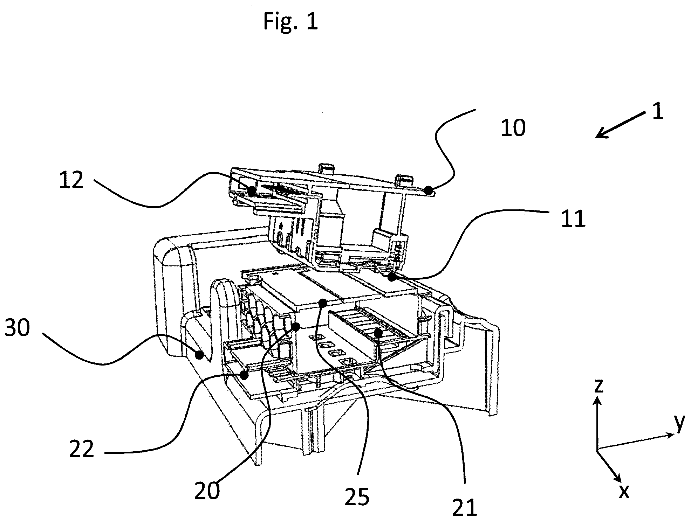

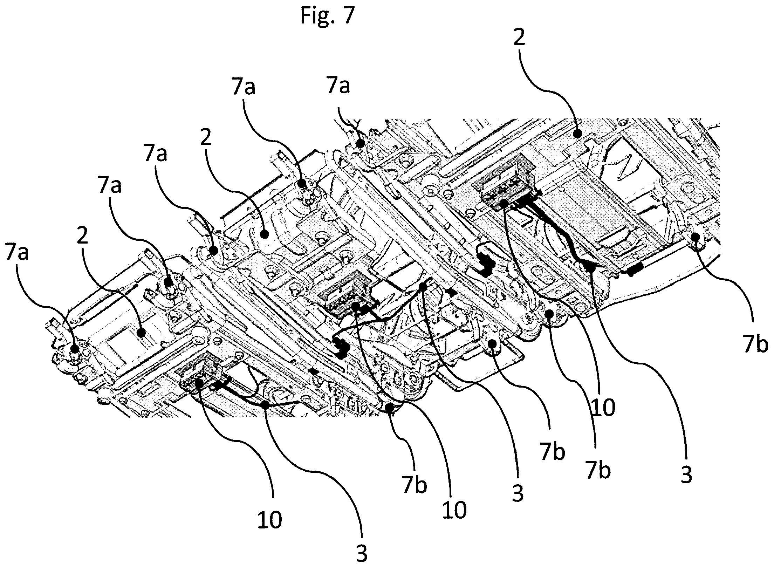

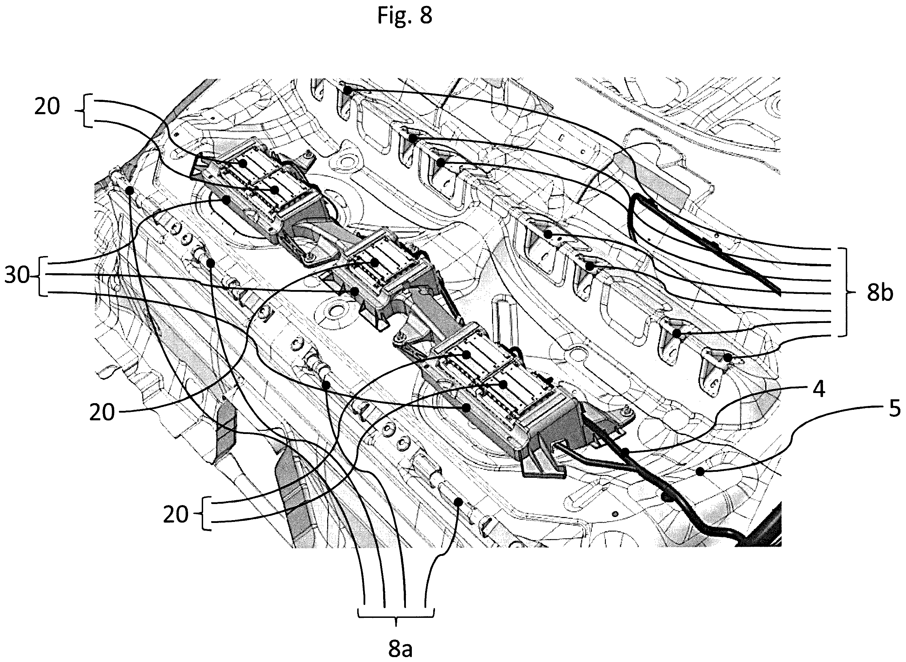

In Fig. 1 ist die erfindungsgemäße Verbindungsvorrichtung 1 gezeigt, welches zur Herstellung einer elektrischen Verbindung zwischen einem Fahrzeugsitz und einem Fahrzeugbordnetz dient. Die Verbindungsvorrichtung umfasst zwei in Eingriff bringbare Verbindungsteile 10, 20, von denen das eine Verbindungsteil als-Stecker 10 und das andere Verbindungsteil als Buchse 20 ausgebildet ist. Der Stecker 10 und die Buchse 20 weisen einander zugeordnete elektrisch leitende Kontaktelemente 11, 21 auf, wobei die Kontaktelemente 11 am Stecker 10 und die Kontaktelemente 21 an der Buchse 20 angeordnet sind. Die Buchse 20 ist in einer Buchsenaufnahme 30 dreidimensional beweglich gelagert. Der Stecker 10 ist in der Buchse 20 in der Kontaktstellung mindestens zweidimensional beweglich gelagert. Zudem sind Federklappen 25 gezeigt, die als Abdeckung der Buchse 20 und der Kontaktelemente 21 dienen können. Das Anschlusselement 12 am Stecker 10 dient dem elektrischen Anschluss des Steckers an die Elektrik des Fahrzeugsitzes 3 (siehe Fig. 7). Das Anschlusselement 22 an der Buchse 20 dient dem elektrischen Anschluss der Buchse an das Fahrzeugbordnetz 4 (siehe Fig. 8). Die Anordnung der Anschlusselemente 12, 22 können auch in anderer Form als hier abgebildet ausgeführt sein.

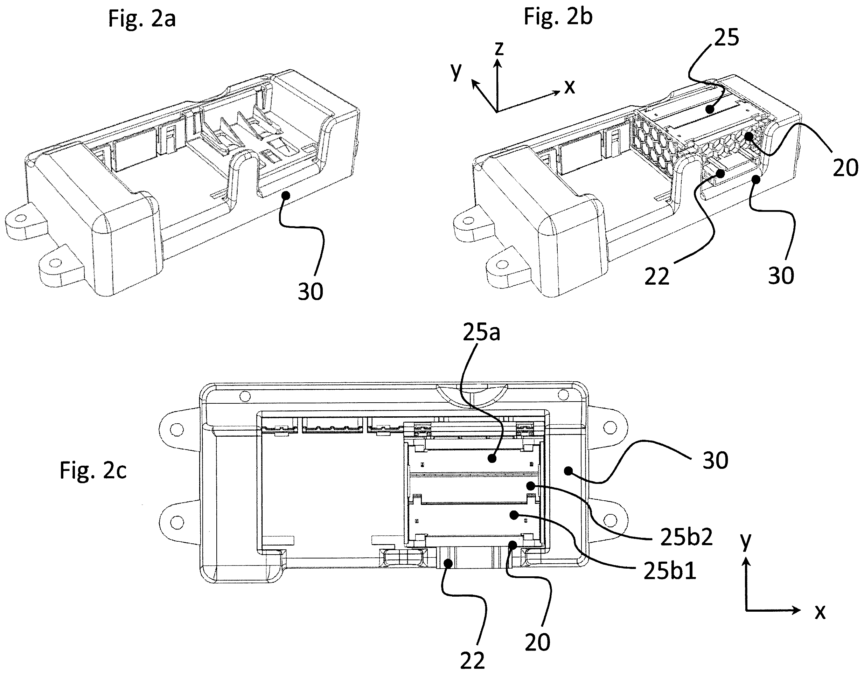

In Fig. 2a ist die Buchsenaufnahme 30 in einer perspektivischen Ansicht ohne Buchse 20 gezeigt. Die Buchsenaufnahme 30 ist in dieser Ausführung zur Aufnahme von zwei Buchsen 30 ausgeführt, wobei in dieser Ansicht nur die rechte Seite zur Aufnahme einer Buchse vorbereit ist. Erfindungsgemäß kann die Buchsenaufnahme 30 auch in einer anderen Ausführungsform so ausgebildet sein, dass die Buchsenaufnahme 30 nur eine Buchse 20 aufnehmen kann. Auch kann Sie in einer weiteren Ausführungsform so ausgeführt sein, dass die Buchsenaufnahme 30 mehr als zwei Buchsen 20 aufnehmen kann.

In Fig. 2b ist die Buchsenaufnahme 30 in einer perspektivischen Ansicht mit der Buchse 20 gezeigt. Die Buchsenaufnahme 30 ist in dieser Ausführung wiederum zur Aufnahme von zwei Buchsen 30 ausgeführt, wobei in dieser Ansicht nur die rechte Seite zur Aufnahme einer Buchse vorbereit ist. Die Buchse 20 ist in Fig. 2b mit Federklappen 25 und einem Anschlusselement 22 zum Anschluss an dem hier nicht dargestellten Fahrzeugbordnetz gezeigt. In Fig. 2c ist die Buchsenaufnahme 30 entsprechend der Fig. 2b in einer Draufsicht mit der Buchse 20 gezeigt. Die Federklappe 25 ist in Fig. 2c als besondere Ausführungsform dargestellt als zwei Federklappen 25a und 25b, wobei die Federklappe 25b zwei Teilklappen 25b1 und 25b2 umfasst, die mittels eines Gelenks verbunden sind.

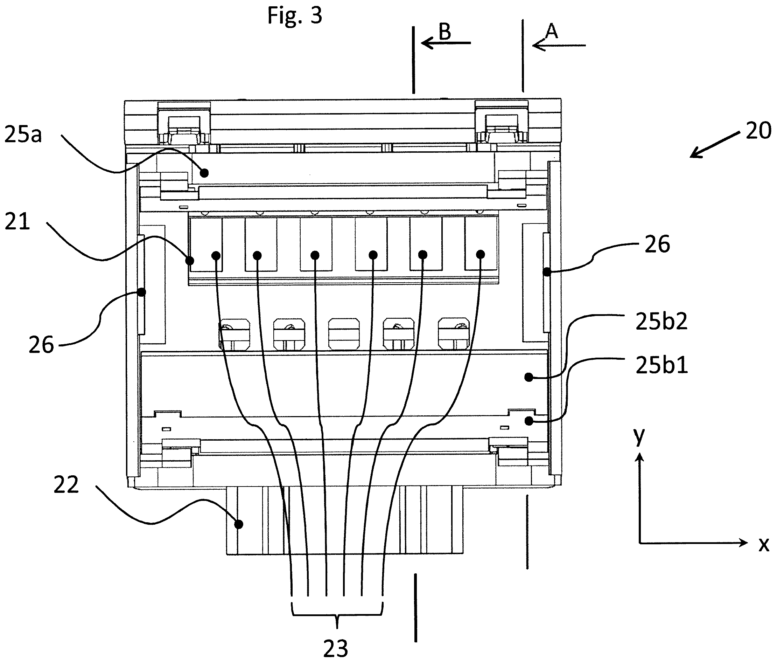

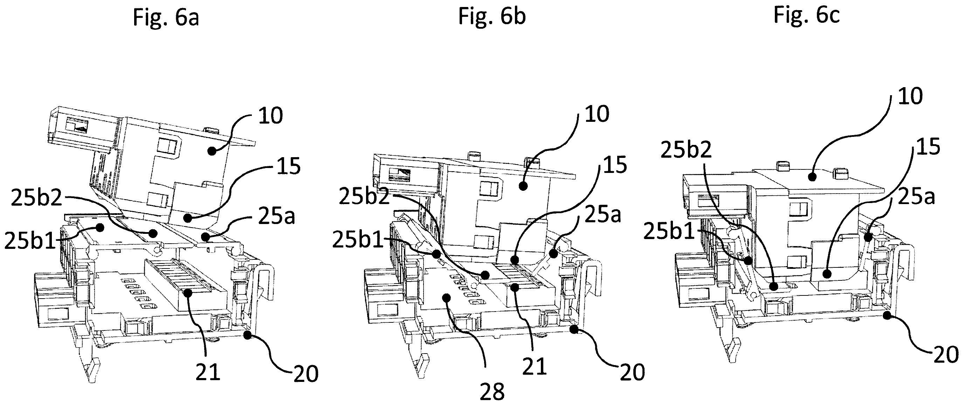

Fig. 3 zeigt die Buchse 20 in der besonderen Ausführungsform mit den Federklappen 25a, 25b1, 25b2 in der Kontaktstellung. Unter Kontaktstellung ist in diese Fig. zu verstehen, dass die Federklappen 25a, 25b1, 25b2 durch den Stecker 10 an den Rand gedrängt sind. Der Stecker 10 ist in dieser Abbildung nicht dargestellt. Die Federklappe 25 ist in Fig. 3 dargestellt als zwei Federklappen 25a und 25b, wobei die zweite Federklappe 25b ein äußeres Element 25b1 und ein inneres Element 25b2 umfasst, die mittels eines Gelenks verbunden sind. Der Steg 26 dient in einer weiteren Ausführungsform dazu, dass die Federklappen in der geschlossenen Stellung eine annähernd ebene Fläche bilden. Das Kontaktelement 21 ist in dieser Ausführungsform mit sechs Kontaktflächen 23 gezeigt. Die Anzahl der Kontaktflächen 23 kann je nach Ausführungsform größer oder kleiner als die dargestellten sechs Kontaktflächen 23 sein. In der Darstellung der Fig. 3 ist Beispielhaft ein Anschlusselement 22 dargestellt, über welches die Verbindung der Kontaktflächen 23 zum Fahrzeugbordnetz geschaffen wird. Das x-y-Koordinatensystem zeigt bildet eine zweidimensionale Fläche in ein Stecker 10 in der Buchse 20 beweglich ist. Weiterhin ist in der Fig. 3 der Schnitt A dargestellt, in dessen auch verlängerten Verlauf die Figuren 6a, 6b und 6c als Schnittbild dargestellt sind. Weiterhin ist in der Fig. 3 der Schnitt B dargestellt, in dessen auch verlängerten Verlauf die Figuren 1, 4 und 5 als Schnittbild dargestellt sind.

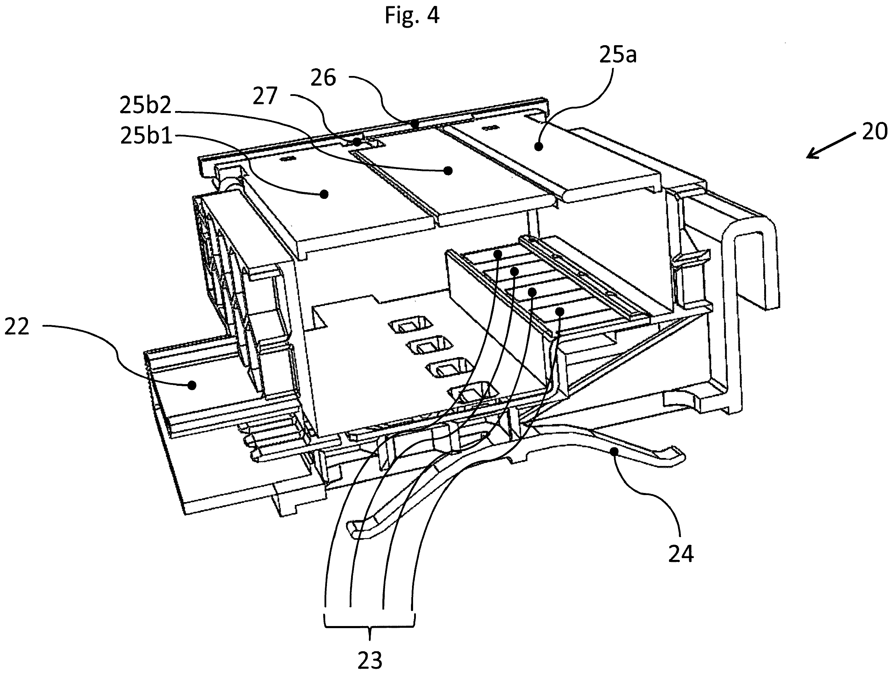

Fig. 4 zeigt die Buchse 20 im in Fig. 3 definierten Schnitt B in der besonderen Ausführungsform mit den Federklappen 25a, 25b1, 25b2 in der geschlossenen Stellung. Die Federklappe 25 ist in Fig. 3 dargestellt als zwei Federklappen 25a und 25b, wobei die zweite Federklappe 25b ein äußeres Element 25b1 und ein inneres Element 25b2 umfasst, die mittels eines Gelenks verbunden sind. Der Steg 26 dient in einer weiteren Ausführungsform dazu, dass die Federklappen 25 bzw. 25a, 25b1, 25b2 in der geschlossenen Stellung eine annähernd ebene Fläche bilden. Vom Kontaktelement 21 sind in dieser Schnittdarstellung vier Kontaktflächen 23 gezeigt. Die Bewegliche Lagerung der Buchse 20 in der Buchsenaufnahme 30 in der z-Richtung erfolgt über mindestens ein Federelement 24. Das Federelement 24 ist in der dargestellten Ausführungsform Teil der Buchse. In dieser speziellen Ausführungsform ist das Federelement einstückig mit dem Boden der Buchse ausgeführt. Das Federelement kann aber in einer anderen Ausführungsform auch als zusätzliches Bauteil mit der Buchse verbunden werden. Auch kann in einer anderen Ausführungsform das Federelement 24 Teil der Buchsenaufnahme 30 sein. Auch in dieser Ausführungsform ist die einstückige Ausführung des Federelements 24 mit dem Boden der Buchsenaufnahme 30 bzw. eine mehrteilige Ausführung des Federelements 24 mit dem Boden der Buchsenaufnahme 30 möglich.

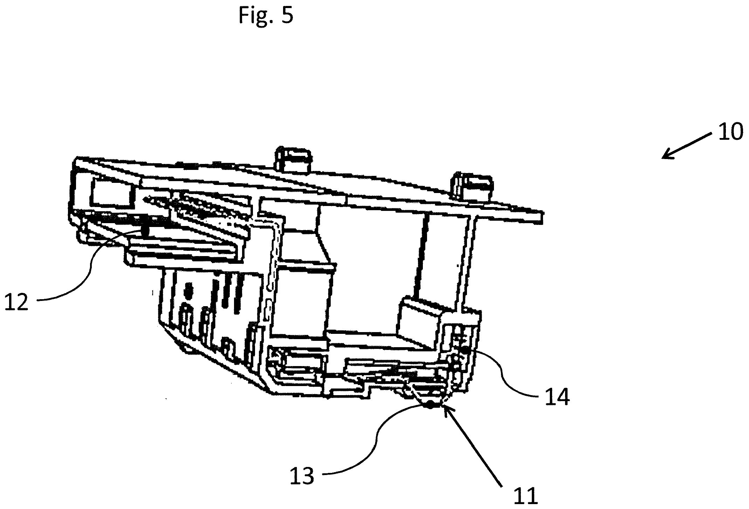

Fig. 5 zeigt den Stecker 10 im in Fig. 3 definierten Schnitt B. Dargestellt ist der Stecker 10 mit dem Kontaktelement 11. In dieser Ausführungsform ist das Kontaktelement 11 durch in Reihe angeordnete, elektrisch leitende Federkontaktstreifen 13 und zugehörige Federelemente 14 gebildet.

Fig. 6a, 6b und 6c zeigen Zustände, beim Einführen oder Herausbringen eines Steckers 10 in eine Buchse 20 im in Fig. 3 definierten Schnitt A.

In Fig. 6a ist der Stecker 10 kurz vor dem Einführen des Steckers 10 in die Buchse 20 bzw. kurz nach dem Herausbringen des Steckers 10 aus der Buchse 20 gezeigt. Die Federklappen 25a, 25b1 und 25b2 bilden eine ebene Fläche. Die Kontaktelemente 11 des Steckers 10 sind durch den Außensteg 15 in dieser Ansicht nicht sichtbar.

In Fig. 6b ist der Stecker 10 beim Einführen bzw. Herausbringen des Steckers 10 in die aus der Buchse 20 in eine Zwischenstellung gezeigt. Die Zwischenstellung ist eine Stellung in der der Stecker in die Buchse 20 eingeführt ist, aber die Kontaktelemente 11 des Steckers 10 keinen Kontakt mit den Kontaktelementen 21 der Buchse 20 haben. Die Federklappen 25a, 25b1 und 25b2 sind etwas in Richtung des inneren Randes der Buchse 20 gedrängt. In dieser Ausführungsform ist die zweite Federklappe 25b in ein äußeres Element 25b1 und ein inneres Element 25b2 geteilt. Das innere Element 25b2 ist in dieser Darstellung in Richtung der Bodenfläche 28 der Buchse 20 gedrängt.

In Fig. 6c ist der Stecker 10 in der Buchse 20 in der Kontaktstellung gezeigt. Die Federklappen 25a, 25b1 und 25b2 sind in Richtung des inneren Randes der Buchse 20 gedrängt. In dieser Ausführungsform ist die zweite Federklappe 25b in ein äußeres Element 25b1 und ein inneres Element 25b2 geteilt. Das innere Element 25b2 ist in dieser Darstellung in Richtung der Bodenfläche 28 der Buchse 20 gedrängt. In dieser Ausführungsform ragt der Außensteg 15 des Steckers 10 seitlich über die Kontaktfläche 21 der Buchse 20. Der Stecker hat mindestens zwei Außenstege 15, wobei in den Ansichten 6a, 6b, 6c nur ein Außensteg 15 sichtbar ist. Die Außenstege 15 weisen mindestens eine Höhe (d. h. Herausragweite vom Stecker) auf, die größer ist als die Herausragweite der Federkontaktstreifen 13 (siehe Fig. 5). So sind die Federkontaktstreifen beim Aufsetzen des Steckers auf eine ebene Fläche durch die Außenstege 15 geschützt und in den Fig. 6a, 6b, 6c nicht sichtbar.

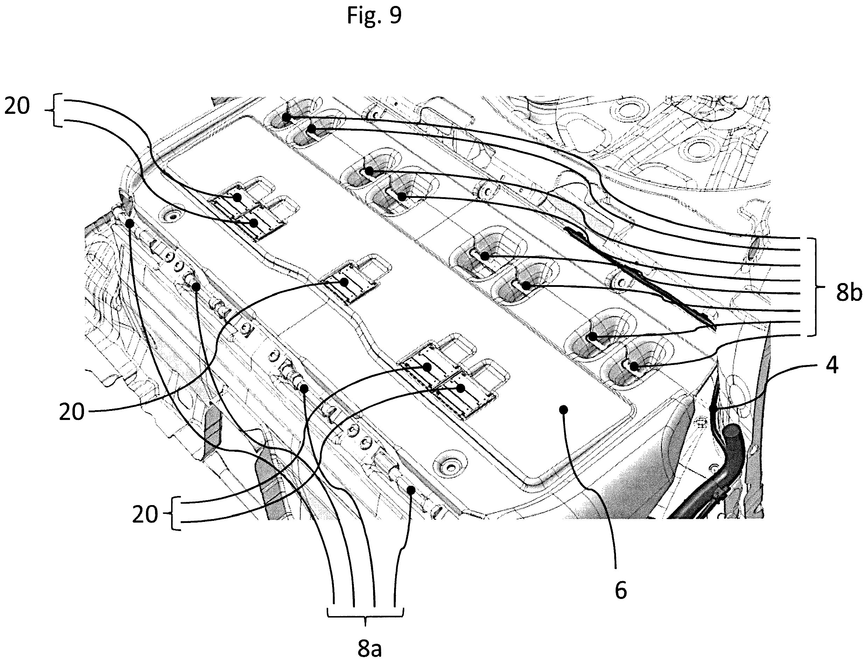

Fig. 7 zeigt einen die Unterseite einer Fahrzeugrücksitzkombination, die aus drei Fahrzeugsitzen 2 besteht. Jeder hier gezeigte Fahrzeugsitz 3 umfasst je einen Stecker 10 und je eine Elektrik des Fahrzeugsitzes 3. Jeder hier gezeigt Sitz ist einzeln aus dem Fahrzeug entnehmbar. Die Befestigung des Sitzes und damit auch eine Fixierung des Steckers 10 in einer Buchse 20 (Fig. 8 und Fig.9), welche an der Fahrzeugbodenstruktur 5 (Fig. 8 und Fig.9) befestigt ist, erfolgt über ein Einführen eines Sitzschwenkelements 7a in eine Sitzschwenkelementbefestigung 8a (Fig. 8 und Fig.9) und einer Verrastung eine Sitzeinrastelements in .die Sitzeinrastelementbefestigung 8b (Fig. 8 und Fig.9). Damit erfolgt die mechanische Verriegelung der elektrischen Verbindungvorrichtung über die Verriegelung des Fahrzeugsitzes an Fixierungspunkten 8a, 8b (Fig. 8 und Fig.9) des Fahrzeugs. Auch ist die Verwendung einer hier nicht abgebildeten einteiligen oder zweigeteilten Rücksitzbank von der Erfindung umfasst.

Fig. 8 und 9 zeigen eine Fahrzeugbodenstruktur zur Befestigung mindestens eines Fahrzeugsitzes. Fig. 8 zeigt die Buchsen 20 mit den Buchsenhalterungen 30 und dem Bordnetz 4, die an einer Fahrzeugbodenstruktur 5 angeordnet sind. Die Fixierungspunkte des Fahrzeugsitzes sind in diesem Ausführungsbeispiel durch Sitzschwenkelementbefestigungen 8a und Sitzeinrastelementbefestigung 8b gebildet. - Durch Fixierung eines Fahrzeugsitzes 2 (Fig. 7) mit den an den Fixierungspunkten 8a, 8b erfolgt auch eine Fixierung des Steckers 10 (Fig. 1) in der Buchse 20. Die Fixierungspunkte 8a, 8b können in einem anderen Ausführungsbeispiel auch in einer anderen Art und Weise ausgeführt sein. Wesentlich an der Erfindung ist die mechanische Sicherung des Steckers 10 (Fig. 1) in der Buchse 20 über die Fixierung des Fahrzeugsitzes 2an den Fixierungspunkten an der Fahrzeugbodenstruktur.

In der Fig. 9 ist zusätzlich zur Fig. 8 eine Bodenabdeckung 6 dargestellt, die eine nahezu ebene Fläche im Bereich der Buchsen ermöglicht. Die Bodenabdeckung 6 ist mit der Oberkante der Buchse 10 mit der zugehörigen Buchsenabdeckung 25 in der geschlossenen Stellung nahezu einer Ebene.

### Bezugszeichenliste

- 1: Elektrische Verbindungsvorrichtung
- 2: Fahrzeugsitz
- 3: Elektrik des Fahrzeugsitzes
- 4: Fahrzeugbordnetz
- 5: Fahrzeugbodenstruktur
- 6: Bodenabdeckung
- 7a: Sitzschwenkelement
- 7b: Sitzeinrastelement
- 8a: Sitzschwenkelementbefestigung
- 8b: Sitzeinrastelementbefestigung
- 10: Stecker
- 11: Kontaktelemente
- 12: Anschlusselement
- 13: Federkontaktstreifen
- 14: Federelement
- 15: Außensteg
- 20: Buchse
- 21: Kontaktelemente
- 22: Anschlusselement
- 23: Kontaktflächen
- 24: Federelement
- 25: Abdeckung
- 25a: erste Federklappe
- 25b: zweite Federklappe
- 25b1: äußere Element der zweiten Federklappe
- 25b2: inneres Element der zweiten Federklappe
- 26: Steg
- 27: Gelenk
- 28: Bodenfläche der Buchse
- 30: Buchsenaufnahme

## Patentansprüche

1. Elektrische Verbindungvorrichtung (1) mit zwei in Eingriff bringbaren Verbindungsteilen (10, 20), von denen das eine Verbindungsteil als Stecker (10) und das andere Verbindungsteil als Buchse (20) ausgebildet ist, wobei der Stecker (10) und die Buchse (20) einander zugeordnete elektrisch leitende Kontaktelemente (11, 21) aufweisen und die elektrische Verbindungvorrichtung
(1) zur Herstellung einer elektrischen Verbindung zwischen einem Fahrzeugsitz
(2) und einem Fahrzeugbordnetz (3) dient,
**dadurch gekennzeichnet, dass**
die Buchse (20) in einer Buchsenaufnahme (30) dreidimensional in eine x-Richtung, eine y-Richtung und eine z-Richtung der Buchse (20) beweglich gelagert ist und der Stecker (10) in der Buchse (20) in der Kontaktstellung mindestens zweidimensional beweglich ist, wobei die x- und y-Richtung jeweils senkrecht zueinander und zu der z-Richtung stehen, wobei Außenmaße der Buchse (20) in die x- und y-Richtung der Buchse (20) kleiner sind als Innenmaße der Buchsenaufnahme (30), so dass die Buchse (20) in der Buchsenaufnahme (30) in der x- und y-Richtung der Buchse (20) beweglich ist.

2. Elektrische Verbindungvorrichtung (1) nach Anspruch 1, **dadurch gekennzeichnet, dass** die bewegliche Lagerung der Buchse (20) in der Buchsenaufnahme (30) in der z-Richtung der Buchse (20) über mindestens ein Federelement (24) erfolgt, wobei das mindestens eine Federelement (24) Teil der Buchsenaufnahme (30) und/oder der Buchse (20) ist.

3. Elektrische Verbindungvorrichtung (1) nach einem der vorhergehenden Ansprüche, **dadurch gekennzeichnet, dass** die Außenmaße des Steckers (10) in x- und y-Richtung der Buchse (20) kleiner sind als die Innenmaße der Buchse (20), so dass der Stecker (10) in der Buchse (20) in der x- und y-Richtung der Buchse (20) beweglich ist.

4. Elektrische Verbindungvorrichtung (1) nach einem der vorhergehenden Ansprüche, **dadurch gekennzeichnet, dass** die Kontaktflächen der Buchse (20) größer sind als die Kontaktflächen der Stecker (10), wobei die Kontaktflächen der Buchse (20) mindestens so groß sind, dass die Kontaktflächen des Steckers (10) an den Kontaktflächen der Buchse (20) anliegen mit einer Mindestkontaktfläche anliegen, ohne einen Kontakt zu einem benachbarten Kontaktfläche innerhalb der Buchse (20) zu haben, wenn sich der Stecker (10) in der Kontaktstellung in der Buchse (20) in einer Endstellung in X- und Y-Richtung der Buchse (20) befindet.

5. Elektrische Verbindungvorrichtung (1) nach einem der vorhergehenden Ansprüche, **dadurch gekennzeichnet, dass** die Kontaktelemente (11) des Steckers (10) als elektrisch leitende Federkontaktstreifen (13) ausgebildet sind und zugehörige Federelemente (14) aufweisen und die Kontaktelemente (21) der Buchse (20) als annähernd ebene Kontaktflächen ausgelegt sind.

6. Elektrische Verbindungvorrichtung (1) nach einem der vorhergehenden Ansprüche, **dadurch gekennzeichnet, dass** eine mechanische Verriegelung der elektrischen Verbindungvorrichtung (1) über die Verriegelung des Fahrzeugsitzes (2) an Fixierungspunkten (8a, 8b) des Fahrzeugs erfolgt.

7. Elektrische Verbindungvorrichtung (1) nach einem der vorhergehenden Ansprüche, **dadurch gekennzeichnet, dass** die Buchse (20) eine Abdeckung (25) aufweist, wobei die Abdeckung (25) durch zwei Federklappen (25a, 25b) gebildet ist, die mit je einem Federgelenk an der Buchse (20) befestigt und in die Buchse (20) schwenkbar gelagert sind.

8. Elektrische Verbindungvorrichtung (1) nach einem der vorhergehenden Ansprüche, **dadurch gekennzeichnet, dass** die Buchse(20) mindestens einen Steg (26) aufweist, der derart angeordnet ist, dass die Federklappen (25a, 25b) in der geschlossenen Stellung eine annähernd ebene Fläche bilden.

9. Elektrische Verbindungvorrichtung (1) nach einem der vorhergehenden Ansprüche, **dadurch gekennzeichnet, dass** die Federklappen (25a, 25b) derart angeordnet sind, dass die Federklappen (25a, 25b) beim Einführen des Steckers (10) in die Buchse (20) an den Rand innerhalb der Buchse (20) gedrängt werden.

10. Elektrische Verbindungvorrichtung (1) nach einem der vorhergehenden Ansprüche, **dadurch gekennzeichnet, dass** mindestens eine Federklappe (25b) in ein inneres Element (25b2) und ein äußeres Element (25b1) geteilt ist, welche durch ein Gelenk verbunden sind.

11. Elektrische Verbindungvorrichtung (1) nach einem der vorhergehenden Ansprüche, **dadurch gekennzeichnet, dass** das zweites Gelenk derart an der Federklappe (25b) angeordnet ist, dass das innere Element der Federklappe (25b2) in der Kontaktstellung annähernd parallel zum Boden der Buchse (20) liegt.

12. Elektrische Verbindungvorrichtung (1) nach einem der vorhergehenden Ansprüche, **dadurch gekennzeichnet, dass** der Stecker (10) an den äußeren Seiten zwei Außenstege (15) aufweist, wobei die Außenstege (15) mindestens eine Höhe aufweisen, die größer als die Herausragweite der Federkontaktstreifen(13) ist.

## Claims

1. An electrical connection device (1) with two connection parts (10, 20), which can be brought into engagement, of which the one connection part is designed as a plug (10) and the other connection part as a socket (20), wherein the plug (10) and the socket (20) have electrically conductive contact elements (11, 21), which are associated with one another, and the electrical connection device (1) serves to establish an electrical connection between a vehicle seat (2) and a vehicle on-board electrical system (3),
**characterized in that**
the socket (20) is movably mounted in a socket receptacle (30) in a three-dimensional manner in an x-direction, a y-direction and a z-direction of the socket (20) and the plug (10) is movable at least in a two-dimensional manner in the socket (20) in the contact position, wherein the x- and y-direction in each case are perpendicular to one another and with respect to the z-direction, wherein the external dimensions of the socket (20) are smaller in the x- and y-direction of the socket (20) than the internal dimensions of the socket receptacle (30), so that the socket (20) is movable in the socket receptacle (30) in the x- and y-direction of the socket (20).

2. The electrical connection device (1) according to Claim 1, **characterized in that** the movable mounting of the socket (20) in the socket receptable (30) takes place in the z-direction of the socket (20) via at least one spring element (24), wherein the at least one spring element (24) is part of the socket receptable (30) and/or the socket (20).

3. The electrical connection device (1) according to any one of the preceding claims, **characterized in that** the external dimensions of the plug (10) in the x- and y-direction of the socket (20) are smaller than the internal dimensions of the socket (20), so that the plug (10) is movable in the socket (20) in the x- and y-direction of the socket (20).

4. The electrical connection device (1) according to any one of the preceding claims, **characterized in that** the contact surfaces of the socket (20) are larger than the contact surfaces of the plug (10), wherein the contact surfaces of the socket (20) are at least so large that the contact surfaces of the plug (10) abut against the contact surfaces of the socket (20) with a minimum contact surface, without having a contact with the adjacent contact surface within the socket (20), if the plug is located in the contact position in the socket (20) in an end position in the X- and Y-direction of the socket (20).

5. The electrical connection device (1) according to any one of the preceding claims, **characterized in that** the contact elements (11) of the plug (10) are designed as electrically conductive spring contact strips (13) and have associated spring elements (14) and the contact elements (21) of the socket (20) are designed as approximately planar contact surfaces.

6. The electrical connection device (1) according to any one of the preceding claims, **characterized in that** a mechanical locking of the electrical connection device (1) takes place via the locking of the vehicle seat (2) at fixing points (8a, 8b) of the vehicle.

7. The electrical connection device (1) according to any one of the preceding claims, **characterized in that** the socket (20) has a cover (25), wherein the cover (25) is formed by two spring flaps (25a, 25b), which are each fastened to the socket (20) with a spring joint and are pivotably mounted in the socket (20).

8. The electrical connection device (1) according to any one of the preceding claims, **characterized in that** the socket (20) has at least one web (26), which is arranged in such a manner, that the spring flaps (25a, 25b) in the closed position form an approximately planar surface.

9. The electrical connection device (1) according to any one of the preceding claims, **characterized in that** the spring flaps (25a, 25b) are arranged in such a manner, that the spring flaps (25a, 25b) are pushed to the edge within the socket (20) when the plug (10) is inserted in to the socket (20).

10. The electrical connection device (1) according to any one of the preceding claims, **characterized in that** at least one spring flap (25b) is divided into an inner element (25b2) and an outer element (25b1), which are connected by a joint.

11. The electrical connection device (1) according to any one of the preceding claims, **characterized in that** the second joint is arranged on the spring flap (25b) in such a manner, that the inner element of the spring flap (25b2) lies in the contact position approximately parallel to the base of the socket (20).

12. The electrical connection device (1) according to any one of the preceding claims, **characterized in that** the plug (10) has two outer webs (15) on the outer sides, wherein the outer webs (15) have at least one height, which is greater than the protruding width of the spring contact strips (13).

## Revendications

1. Dispositif de liaison électrique (1) avec deux parties de liaison (10, 20) pouvant être emboîtées, dont une partie de liaison est conçue comme un connecteur mâle (10) et l'autre partie de liaison est conçue comme un connecteur femelle (20), dans lequel le connecteur mâle (10) et le connecteur femelle (20) comprennent des éléments de contact électro-conducteurs (11, 21) correspondant entre eux et le dispositif de branchement électrique (1) permettant l'établissement d'une liaison électrique entre un siège de conducteur (2) et un réseau embarqué de véhicule (3),
**caractérisé en ce que**
le connecteur femelle (20) est logé dans un logement de connecteur femelle (30) de façon à être mobile de manière tridimensionnelle dans une direction x, une direction y et une direction z du connecteur femelle (20) et le connecteur mâle (10) est mobile dans le connecteur femelle (20) dans la position de contact de manière au moins bidimensionnelle, dans lequel les directions x et y sont perpendiculaires entre elles et par rapport à la direction z, dans lequel les dimensions extérieures du connecteur femelle (20) dans les directions x et y du connecteur femelle (20) sont inférieures aux dimensions intérieures du logement de connecteur femelle (30), de façon à ce que le connecteur femelle (20) soit mobile dans le logement de connecteur femelle (30) dans les directions x et y du connecteur femelle (20).

2. Dispositif de liaison électrique (1) selon la revendication 1, **caractérisé en ce que** le logement mobile du connecteur femelle (20) dans le logement de connecteur femelle (30) dans la direction z du connecteur femelle (20) a lieu par l'intermédiaire d'au moins un élément à ressort (24), dans lequel l'au moins un élément à ressort (24) fait partie du logement de connecteur femelle (30) et/ou du connecteur femelle (20).

3. Dispositif de liaison électrique (1) selon l'une des revendications précédentes, **caractérisé en ce que** les dimensions extérieures du connecteur mâle (10) dans les directions x et y du connecteur femelle (20) sont inférieures aux dimensions intérieures du connecteur femelle (20), de façon à ce que le connecteur mâle (10) soit mobile dans le connecteur femelle (20) dans les directions x et y du connecteur femelle (20).

4. Dispositif de liaison électrique (1) selon l'une des revendications précédentes, **caractérisé en ce que** les surfaces de contact du connecteur femelle (20) sont plus grandes que les surfaces de contact du connecteur mâle (10), dans lequel les surfaces de contact du connecteur femelle (20) sont au moins aussi grandes de façon à ce que les surfaces de contact du connecteur mâle (10) s'appuient contre les surfaces de contact du connecteur femelle (20) avec une surface de contact minimale, sans avoir de contact avec une surface de contact adjacente à l'intérieur du connecteur femelle (20), lorsque le connecteur mâle (10) se trouve, dans la position de contact, dans le connecteur femelle (20), dans une position finale dans les directions X et Y du connecteur femelle (20).

5. Dispositif de liaison électrique (1) selon l'une des revendications précédentes, **caractérisé en ce que** les éléments de contact (11) du connecteur mâle (10) sont conçus comme des lames de contact à ressort électro-conductrices (13) et comprennent des éléments à ressorts (14) correspondants et les éléments de contact (21) du connecteur femelle (20) sont conçus comme des surfaces de contact approximativement planes.

6. Dispositif de liaison électrique (1) selon l'une des revendications précédentes, **caractérisé en ce qu'**un verrouillage mécanique du dispositif de liaison électrique (1) a lieu par l'intermédiaire du verrouillage du siège du conducteur (2) au niveau de points de fixation (8a, 8b) du véhicule.

7. Dispositif de liaison électrique (1) selon l'une des revendications précédentes, **caractérisé en ce que** le connecteur femelle (20) comprend un couvercle (25), dans lequel le couvercle (25) est constitué de deux clapets à ressorts (25a, 25b) qui sont fixés chacun avec une articulation à ressort au connecteur femelle (20) et qui sont logés de manière pivotante dans le connecteur femelle (20).

8. Dispositif de liaison électrique (1) selon l'une des revendications précédentes, **caractérisé en ce que** le connecteur femelle (20) comprend au moins une nervure (26) qui est disposée de façon à ce que les clapets à ressorts (25a, 25b) forment, dans la position fermée, une surface approximativement plane.

9. Dispositif de liaison électrique (1) selon l'une des revendications précédentes, **caractérisé en ce que**, lors de l'introduction du connecteur mâle (10) dans le connecteur femelle (20), les clapets à ressorts (25a, 25b) sont disposés de telle sorte que les clapets à ressorts (25a, 25b) sont comprimés contre le bord à l'intérieur du connecteur femelle (20).

10. Dispositif de liaison électrique (1) selon l'une des revendications précédentes, **caractérisé en ce qu'**au moins un clapet à ressort (25b) est divisé en un élément interne (25b2) et un élément externe (25b1), reliés par une articulation.

11. Dispositif de liaison électrique (1) selon l'une des revendications précédentes, **caractérisé en ce qu'**une deuxième articulation est disposée sur le clapet à ressort (25b) de façon à ce que l'élément interne du clapet à ressort (25b2) se trouve, dans la position de contact, approximativement parallèlement au fond du connecteur femelle (20).

12. Dispositif de liaison électrique (1) selon l'une des revendications précédentes, **caractérisé en ce que** le connecteur mâle (10) comprend, sur les côtés extérieurs, deux nervures externes (15), dans lequel les nervures externes (15) présentent au moins une hauteur qui est supérieure à la hauteur de dépassement des lames de contact à ressorts (13).
